# EUROPEAN PATENT SPECIFICATION

(11) **EP 3 109 288 B1**
(45) Date of publication and mention of the grant of the patent: **26.01.2022**
(21) Application number: 15724502.8
(22) Date of filing: 03.06.2015
(51) Int. Cl.: C09H 1/04, C09H 5/00, C14C 3/00, C08L 89/06, C14C 3/08, C14C 3/32

(54) **METHOD FOR PRODUCING HYDROLYSED COLLAGEN FOR TANNING AND RETANNING LEATHER WITH WET-BLUE LEATHER WASTE, AND PRODUCT OBTAINED USING SAID METHOD**
VERFAHREN ZUR REPARATUR VON HYDROLYSIERTEM KOLLAGEN ZUM GERBEN UND ZUM NACHGERBEN VON LEDER MIT WET-BLUE-LEDERABFÄLLEN UND PRODUKT AUS DIESEM VERFAHREN
PROCÉDÉ POUR LA PRÉPARATION DE COLLAGÈNE HYDROLYSÉ POUR LE TANNAGE ET LE TANNAGE RENOUVELÉ DE CUIRS AVEC DES REBUTS DE CUIR "WET-BLUE", PRODUIT OBTENU AVEC UN TEL PROCÉDÉ

(30) Priority: 08.05.2015 MX 2015005865
(43) Date of publication of application: 28.12.2016
(73) Proprietor: Quimica Stoever S.A. De C.V., 37290 Guanajuato (MX)
(72) Inventor: DÍAZ PÉREZ, Ramón, 45138 Zapopan - Jalisco (MX)
(74) Representative: Isern Patentes y Marcas S.L.
(86) International application number: PCT/MX2015/000084
(87) International publication number: WO 2016/182418

(56) References cited:
- CN-A- 1 298 954
- CN-A- 101 058 642
- MX-A- 2009 007 196
- MX-A- 2009 007 196
- MARIA J. FERREIRA ET AL: "Alkaline Hydrolysis of Chromium Tanned Leather Scrap Fibers and Anaerobic Biodegradation of the Products", WASTE AND BIOMASS VALORIZATION, vol. 5, no. 4, 4 August 2013 (2013-08-04), pages 551-562, XP055344597, NL ISSN: 1877-2641, DOI: 10.1007/s12649-013-9252-9
- DATABASE WPI Derwent Publications Ltd., London, GB; XP055329913 'METHOD OF PREPARING PROTEIN FILLER FOR LEATHER BY USING CHROMIUMCONTAINING LEATHER SCRAP - HAS EXTREME LOW HEXAVALENT CHROMIUM TO OVERCOME THE POLLUTION GENERATED BY WASTE DISPOSAL' & TW 200 948 972 A (LIGG-I) 01 December 2009
- DATABASE WPI Derwent Publications Ltd., London, GB; XP055329916 'PREPARING TANNING PROTEIN FILLING WITH TANNING CHROMIUM-CONTAINING WASTE LEATHER INVOLVES PRE-TREATING CRUSHED WASTE IN ALKALINE SOLUTION TO OBTAIN FILTRATE OF COLLAGEN POLYPEPTIDE FOLLOWED BY ADDING POLYCARBOXYLIC ACID N-HYDROXYSUCCINIMIDE' & CN 102 559 952 A (USCU) 11 July 2012

## Description

### Background and field of the invention

The present invention relates to the field of leather tanning, and more specifically relates to a process for preparing hydrolyzed collagen used in the field of leather retanning by using waste originated from the leather known as wet-blue.

The patent US 8,328,878 B2 "Yarn of Animal Collagen Fiber and Manufacture Process Thereof", granted to Liwen Zhang is known. In this patent, leather shavings (that is, slices of leather) are denatured by means of a hydrolyzing reaction using an alkali and applying temperature, until obtaining collagen; the main difference is that the product is suitable for textiles and not for leather retanning, in addition to the use of materials which are different to the ones used herein. In the present application, hydrolysis is performed for a controlled time that is different to the one used with temperatures of 50 ºC or less; in the present invention the base mixture is boiled and the times used are much shorter, of even 12 hours versus 24 hours used in the aforementioned patent.

The patent US 7,651,531 B2, titled "Bio-Tanning Process for Leather Making", granted to Subramani et al. is also known. The similarity of this patent to the present invention is the use of the hydrolysis reaction and the use of wet-blue shavings, coming from leather waste that is a pollutant, but due to the harmful effects of pollution, 50-70 % of these residual shavings is used and is brought up to 100 % with plant-based shavings.

But the efficiency is lower with respect to the contributions these compositions make to the leather. Then, in order to obtain an efficiency of 100 % of the beneficial effects on leather it is necessary to use other substances, such as: aldehydes, bisulfites, poly-isocyanate, and enzymes such as transglutamase.

In the patent US 7,753,964 B2, granted to Hueffer et al., titled "Method for Producing a Leather Semi-Finished Product", hydrolysis is used for denaturing wet-blue shavings, mentioning that it is a serious pollutant, whereby it is indicated that a mixed tanning is necessary to cover the wet-blue tanning, recommending as an example wet-white tanning. The present invention has a major difference regarding the use of clay to bring down the percentage of chromium together with a mechanical method to add this clay to the collagen, which is not the case in the present invention. In patent '964, it is also necessary to counteract the lack of efficiency lost by the collagen when adding clays, by adding, for example, urea, alcohols, polyols, propylene carbonate, organic amides, urethanes, saccharides or saccharide derivatives, nitrocellulose, sulphide cellulose and ethyl cellulose. This is a problem that does not exist in the present invention.

The patent US 8,358,878 B2, granted to Zhang titled "Yarn of Animal Collagen Fiber and Manufacture Process Thereof"; in this patent the Hydrolysis by hydroxylation reaction is used, that is with alkali, without denaturation of the collagen. In this case, animal collagen fibers and/or textile fibers are used. The final goal is to preserve the collagen for its fibers, since the final application is within the Textile Industry. Temperatures of 50 ºC or less are used. The similarity with our invention is the hydrolyzing reaction with alkali and neutralization with acids. The application, the working temperatures, the origin of the animal fibers, steps such as stuffing and twisting of raw materials, and also the process times in each of the steps are quite different.

Finally, the patent Mx 295,217 granted to Stoever titled "COMPOSITION BASED ON PROTEINS OF COLLAGEN ORIGIN WITH PHENOLIC RETANNING AGENTS FOR USE IN RETANNING AS LEATHER FILLING" is known, which relates to a process of hydroxylation based on wet-white leather that essentially differs from the present invention in that it uses wet-white leather having a different chemical composition.

By means of the process of the present application, a leather with a filling of at least 75 % is obtained, which had not been achieved by known processes. A table is shown for rapid differentiation:
a) Wet-white hydrolyzed collagen: Chromium free collagen is obtained.
b) Wet-blue hydrolyzed collagen: The shine and color intensity is obtained in the dyeing step. It is highly stable.
c) And, lastly, reference is made to the use of dicyandiamide synthetic resin, which is a non-collagen product, but has similar functions. A chromiumfree product is obtained, which product does not fill the sides of the leather but only the centers of the same, wasting a high percentage of leather.

### Objects of the invention

The object of the invention is to provide a process for preparing hydrolyzed collagen which may be used in tanning and retanning of hides or leathers for shoes and similar applications.

A further object of the invention is to provide a process having low pollution characteristics compared with the processes used so far.

The previous objects are achieved by the implementation of a process as detailed below in the present detailed description of the invention.

Yet a further object is to obtain leather with a filling having a concentration of at least 75 %.

### Brief description of the invention

A process by means of which hydrolyzed collagen is obtained for its use in the hide or leather tanning and retanning industry is provided. By means of the product obtained, the features of hides can be improved by filling the spaces in the same in a more effective way and fortifying the ones that require it.

### Detailed description of the invention

The tanning and retanning process is widely known in the field, therefore it will not be discussed in detail.

The process for preparing collagen comprises:
1. Adding liquid caustic soda at 50 ºBé (Baumé scale density) to an open stainless-steel reactor, provided with a stirrer, a steam jacket and a set of valves and accessories for its operation.
2. While stirring, the temperature is raised to 80 ºC by steam, although any other heating means such as electric heaters or gas burners can be used.
3. Keep stirring while adding wet-blue shavings, avoiding excessive foaming by means of the addition of an anti-foaming agent such as Antimussol Wo6 ^{®}, maintaining the temperature at 80 ºC.
4. Once the addition of wet-blue shavings is finished, bring the mixture to boiling temperature for 12 hours, wherein the shavings are incorporated in a wet state.
5. Carrying out laboratory tests starting at 9 hours of boiling, and then every hour, until 12 hours, to determine the stability of the emulsion and concentration of the same at 10 % of concentration.
6. Depending on the previous step, maintaining boiling until achieving the minimum of insoluble matter as desired in the emulsion and stability of the emulsion, or proceeding to the next step:
7. Allowing free cooling while stirring, in the reactor, to 55-65 ºC; when this temperature is reached, starting neutralization of the caustic soda with acetic acid until obtaining a pH of 6.8-7.2.
8. Adding a bactericidal agent, preferably one based on 4-chloro-3-methylphenol sodium salt such as Preventol WB^{®}.
9. Adjusting the pH again between 6.8 and 7.2.
10. Adjusting the moisture percentage to 23-27 %, concentration to 73-77 % of hydrolyzed collagen, preferably 75 %, pH of 6.8 to 7.2 and viscosity of 6,000 to 36,000 cps (Brookfield).

At the end of this process, a dark brown viscous liquid is obtained.

### EXAMPLE OF PREPARATION

Step 1: -It was necessary to have the equipment ready, including: a 10-ton stainless steel reactor with stirring and steam jacket, boiler; stirring to room temperature.
Step 2: -1,000.0 Kg of wet-blue shavings were taken as a basis to calculate the formulation as a percentage:

**FORMULA:**

| Raw materials | Amounts | Percentages |
|---|---|---|
| Wet-blue shavings | 1,000.0 Kg | 100.00 |
| Caustic soda at 50 % | 100.0 Kg | 10.00 |
| Acetic acid | 48.1 Kg | 4.81 |
| Antimussol W06 | 7.3 Kg | 0.73 |
| Preventol WB | 0.5 Kg | 0.05 |

Step 3: -The caustic soda at 50 % was added to the reactor and the temperature was applied until reaching 80 ºC, taking care that the addition rate was not greater than 75 rpm.
Step 4: -The wet-blue shavings were added to the reactor while stirring and the hydrolyzation reaction was started.

In this step the volume of foam in the reaction increases up to 100 % and here is where Antimussol W06 was added in order to control it.

Step 5: -When the boiling point was reached (from 96 to 100 ºC), the timing of the reaction time of the hydrolyzation started; when reaching 8 or 9 hours of reaction, this is the moment for carrying out a first monitoring to supervise the hydrolyzation point of the same, which must be almost 100 % hydrolyzed; in order to a) continue with the hydrolyzation reaction or b) proceed to the next step.

Step 6: -In the previous step (Step 5), if hydrolyzation has finished (the wet-blue shavings are completely dissolved), the steam application is stopped and it is left to cool at room temperature, until reaching the range of 60-70 ºC.

Step 7: -Acetic acid addition was started to neutralize the alkalinity of this reaction, which is at a pH greater than or equal to 12.

Step 8: -In this step the pH was adjusted to a range of 6.8 a 7.2, since the most optimal pH scale for the stability of this composition is within this range.

This adjustment was performed once Preventol^{®}-WB (bactericidal agent) was added. The addition of the bactericidal agent was performed in this step because the temperature had already decreased, between 60 and 70 ºC. At this time of the addition of bactericidal agent the pH is verified again, and it should be between 6.8 and 7.2.

Step 9:-In this step a general check was performed on the collagen composition: pH, moisture, viscosity and physical appearance.

In this semi-final check, it was observed that the results from physical and chemical analyses were within the desired ranges:
pH: from 6.8-7.2
Brookfield Viscosity: from 6,000 to 36,000 centipoises
Moisture: from 23.00 to 27.00 %
Physical appearance: Viscous dark-brown semi-liquid

The semi-final check is carried out during the process and consists of a physical and chemical analysis of all the parameters, and at the end of the process, the same check is performed again.

As indicated in step 5, starting at the ninth hour from the start of the boiling several observations will be carried out: on the hydrolyzed product, verifying aliquots of the emulsion at 10 % of concentration in distilled water, the expected results should be the following: the emulsion should be stable and all the shavings should be dissolved, up to a desired value allowed by the retanning process with a minimum percentage of insoluble matter, that is, small fragments of undissolved shavings. The emulsion is stable when an emulsifiability test is performed in the physical and chemical analysis laboratory, which consists of dissolving 10 g of product in 90 g of distilled water; the solution should be homogeneous and have no phase separation.

Insoluble matter should be observed in a minimum percentage of about 0.25 %, which is equivalent to 20.0 kg of the total amount of 8,500 kg of product obtained from hydrolyzed collagen contained in the reactor.

When adding the bactericidal agent the pH is modified due to the alkaline nature of the same, whereby it must be adjusted. The bactericidal agent used is marketed by Bayern^{®} and its composition is 30.00-35.00 % - 4-chloro-3-methylphenol sodium salt and 12.00-15.00 % of sodium oxide and biphenyl-2-yl.

The % of moisture is determined by the Dean Stark method and the result is the amount of water in the percentage product and the percentage difference of the moisture is the concentration of the product itself.

Antimussol wo6 is a glycol used exclusively for its anti-foaming property, and is manufactured by CLARIANT^{®}.

The temperature control is performed by opening and closing the corresponding steam intake valves to the reactor jacket.

The following examples of application were carried out with the product obtained above, which demonstrate the technical advantages provided by this new product.

A leather is obtained with a filling feature of at least 75 % of concentration compared to those offered on the market reaching a maximum concentration of 64.

Once the product with the features described above has been obtained, the product can be packaged, concluding the manufacturing process thereof.

### EXAMPLES OF APPLICATION OF HYDROLYZED COLLAGEN EXAMPLE 2

This application was carried out in a process of retanning-dyeinggreasing, with wet-blue leather:

The following steps were carried out:
Step 1: WASHING: 100.00 % of water with respect to the weight of the leather to be treated, 0.20 % of Quistopal-B (surfactant), and 0.20 % of acetic acid were added to a tanning drum; it was spun for 20 min and drained. It should be noted that the referred percentages are in relation to the weight of leather.
Step 2: PRE-RETANNING: Clean water was added again until reaching 100.00 % with respect to the weight of the leather, 3.00 % of chromium 33, 2.50 % of Safetan DD-001, left to spin for 30 min, then 2.00 % of the hydrolyzed collagen preparation obtained in example 1 was added and the drum was spun for 60 min.
Step 3: NEUTRALIZING: 2.00 % of sodium formate was added to the drum, it was left to spin for 60 min, then 2.50 % of Syntan-VG was added, it was spun for 10 min, 3.00 % of Syntan-AC was added, it was spun for 60 min, at this time the pH was checked, which should be 4.2, it was drained and washed. If the pH is not the one indicated, it is necessary to adjust it before proceeding to the next step.
Step 4: RETANNING: 30.00 % of water with respect to the weight of leather was added to the drum and the following products were added in the order indicated below:
   0.50 %- Quistomax-LS
   3.00 %- Safetan DD-001
   3.00 %- Syntan-B
   3.00 %- Safetan BB-003
   3.00 %- Syntan-BAS
   3.00 %- Tara
   1.80 %- Habana-H
   0.20 %- Pardo-IGC

The drum was spun for 80 minutes and the leather was checked to verify that the aniline had gone through and conferred the color sought. 150.00 % of water and 2.00 % of the hydrolyzed collagen preparation obtained in Example 1 were added and it was spun for 10 min, 3.00 % of Syntan-AC was added and it was spun for 40 min, 0.50 % of formic acid was added and it was spun for 20 min, then the drum was drained and the leather was washed.

Step 5: GREASING: 150.00 % of water at 55 ºC and 8.50 % of Bioil-RW were added, it was spun for 60 min, 0.80 % of formic acid was added, it was spun for 20 min, the drum was drained and the leather was washed, then the leather was extracted from the drum, laid out and dried.

### EXAMPLE 3

This application was carried out in a tanning process with wet-blue leather.

Step 1: WASHING 1: 200.00 % of water, 0.20 % of Quistopal-B (surfactant), and 0.50 % of formic acid were added, and the drum was spun for 20 min and drained. WASHING 2: 100.00 % of water, 0.70 % of Cal-TR (delimer), and 1.00 % of ammonium sulfate were added, spun for 20 min and a leather cut was inspected to check if it was colorless or if it had a slightly pink vein and it was drained, adjusting until all color was lost. All weights are based on the weight of the leather.

Step 2: TANNING: After this washing a brine was formed, the function of which is to open the pores of the leather for the subsequent tanning. 50.00 % of water, 8.00 % of granular salt (sodium chloride), and 0.50 % of sodium formate were added and spun for 15 min; the Baumé density was checked and the result should be between 7.5-8.0 ºBé, adjusting if needed.

The sulfuric acid was added immediately in 9 parts, spinning each one for 10 min; the pH, which should be between 2.8 and 3.0 was checked, and the leather cut was inspected, searching for a yellow color, and otherwise, adjusting the acid until reaching the goal.

3.00 % of chromium 33 was added immediately and spun for 45 min. 2.00 % of the preparation of hydrolyzed collagen was added immediately and spun for 30 min. Then 3.00 % of chromium 33 was added and spun for 90 min.

Step 3: BASIFICATION: 0.40 % of sodium formate, 0.40 % of sodium bicarbonate, and 0.40 % of sodium carbonate were added and spun for 6 hours; it was diluted 1:10 in 3 parts of 15 min each and drained.

It should be noted that the preparation of hydrolyzed collagen has the added advantage of being a very good filling for leather, which can be used in tanning and retanning; this results in the leather having stronger fibers and in the materials entering the leather more fluidly.

### EXAMPLE 4

### Application of a synthetic dicyandiamide-based resin based to leather

NOTE: It is important to know that this resin was used widely to fill the leathers during retanning, but the filling was not done on the total surface, that is, only the centers of the leather were filled, or rather refilled, i.e. the central part of a whole piece of leather and not the sides, which were cut off.

Step 1: WASHING: 200.00 % of water, 1.00 % of Synthol CP 996 and 0.50 % of formic acid were added, spun for 30 min, the wetting was checked, it was drained and the leather was washed.

Step 2: PRETANNING: 100.00 % of water, 6.00 % of chromium 33, and 2.00 % of Synthol HF 377 were added, and spun for 60 min.

Step 3: NEUTRALIZING: 2.00 % of Syntan DM 262 was added, spun for 30 min, 1.00 % of sodium bicarbonate was added, spun for 60 min, and it was drained and washed.

25.00 % of water, 2.00 % of sodium formate, and 2.00 % of sodium bicarbonate were added, spun for 30 min, 2.00 % of Eurozyme was added, spun for 30 min, 2.00 % of ammonium bicarbonate was added, spun for 90 min, and it was drained and washed.

30.00 % of water, 1.50 % of Stoplast-C3, 3.00 % of dicyandiamide synthetic resin, 1.50 % of Syntan-VG were added, spun for 30 min, 3.00 % of Habana-H was added, spun for 45 min, and the aniline crossing of the leather was checked.

Step 4: GREASING: 14.00 % of Sulphirol HF-377, 4.00 % of Quistomax-LS were added, spun for 45 min.

Step 5: FIXATION: 150.00 % of water at 50 ºC and 0.70 % of formic acid were added, spun for 10 min, 0.70 % of formic acid was added, spun for 10 min, 0.70 % of formic acid was added, spun for 10 min, and it was drained and washed.

Step 6: REMOUNTING: 100.00 % of water was added at 45 ºC, 0.70 % of formic acid was added, spun for 10 min, 0.30 % of Habana-H was added, spun for 10 min, 0.70 % formic acid was added, spun for 15 min, and it was drained and washed.

The product thus obtained is not only completely filled in the center of the same but also in the sides of the same.

A major difference between the hydrolyzed collagen and the synthetic resin is that hydrolyzed collagen can be used in tanning (which is very good at providing strength to the leather, especially in the fibers and in retanning where it fully fills especially the thin surfaces, where the fiber is very open, and almost 100.00 % of the leather surface can be used.

By contrast, the dicyandiamide synthetic resin cannot be used in tanning; therefore, this is a great disadvantage when compared with hydrolyzed collagen.

Table 1. Comparison of the features of the product obtained by the process object of the present invention with a condensation process.

| PROCESS | HYDROLIZATION OF WET-BLUE ANIMAL LEATHER | CONDENSATION |
|---|---|---|
| NATURE | POLYPEPTIDES | DICYANDIAMIDE SYNTHETIC RESIN |
| PH | 6.8-7.2 | 8.0-9.0 |
| CHARACTER | Non ionic | Non ionic |
| ACTIVE MATTER | 73.00-77.00 % | ➢ 93.00 % |
| VISCOSITY | 6,000-36,000 cps | Not applicable |

## Claims

1. A process for preparing hydrolyzed collagen for tanning and retanning leather by using wet-blue leather waste, **characterized in that** it comprises the steps of:
1) adding liquid caustic soda at 50 °Bé (Baume scale density) to an open stainless-steel reactor, provided with a stirrer, a stream jacket and a set of valves and accessories for its operation;
2) stirring and raising the temperature to 80°C;
3) adding wet-blue shavings or waste while stirring, avoiding excessive foaming by means of the addition of an anti-foaming agent such as Antimussol Wo6^{®}, maintaining the temperature at 80°C;
4) increasing the temperature until reaching a boiling temperature once the addition of wet-blue shavings is finished, maintaining the temperature up to 12 hours, wherein the shavings are incorporated in a wet state;
5) carrying out laboratory tests starting at 9 hours of boiling, and then every hour, until 12 hours, to determine the stability of the emulsion and concentration thereof at 10 % of concentration;
6) depending on the previous analysis, maintaining boiling until achieving the minimum of insoluble matter as desired in the emulsion and stability of the emulsion, or:
7) allowing free cooling while stirring, in the reactor, up to 55-65 °C; when this temperature is reached, starting neutralization of the caustic soda with acetic acid until obtaining a pH of 6.8-7.2;
8) adding a bactericidal agent, preferably one based on 4-chloro-3-methylphenol sodium salt such as Preventol WB^{®};
9) adjusting the pH, if necessary, between 6.8 and 7.2;
10) adjusting, if necessary, the moisture percentage to 23-27 %, concentration of hydrolyzed collagen to 73-77 %, preferably 75 %, pH from 6.8 to 7.2 and viscosity from 6,000 to 36,000 cps (Brookfield).

2. A hydrolyzed collagen obtained by the process according to claim 1, **characterized in that** it has a pH of 6.8 to 7.2, a viscosity from 6,000 to 36,000 cps, a moisture percentage of 23 to 27 %, a concentration of hydrolyzed collagen of 73-77 %, and a non-ionic character.

3. A tanned or retanned leather product **characterized in that** is obtained by tanning or retanning the same with the hydrolyzed collagen according to claim 2, wherein said product comprising a filling of at least 75 % of concentration.

## Patentansprüche

1. Verfahren zur Herstellung von hydrolysiertem Kollagen zum Gerben und Nachgerben von Leder unter Verwendung von Wet-Blue-Lederabfällen, **dadurch gekennzeichnet, dass** es die folgenden Schritte umfasst:
1) Zugeben von flüssiger Natronlauge bei 50 °Bé (Baume-Skalendichte) in einen offenen Edelstahlreaktor, der mit einem Rührer, einem Strömungsmantel und einem Satz von Ventilen und Zubehör für seinen Betrieb versehe ist;
2) Rühren und Erhöhen der Temperatur auf 80 °C;
3) Zugeben von Wet-Blue-Spänen oder -Abfällen unter Rühren, Vermeiden übermäßiger Schaumbildung durch Zugeben eines Antischaummittels wie Antimussol Wo6^{®}, Beibehalten der Temperatur bei 80 °C;
4) Erhöhen der Temperatur bis zum Erreichen einer Siedetemperatur, sobald die Zugabe der Wet-Blue-Späne beendet ist, wobei die Temperatur bis zu 12 Stunden gehalten wird, wobei die Späne in einem nassen Zustand aufgenommen werden;
5) Durchführen von Labortests beginnend nach 9 Stunden Sieden und dann stündlich bis 12 Stunden, um die Stabilität der Emulsion und deren Konzentration bei einer Konzentration von 10 % zu bestimmen;
6) abhängig von der vorherigen Analyse, Beibehalten des Siedens, bis das gewünschte Minimum an unlöslichen Stoffen in der Emulsion und Stabilität der Emulsion erreicht ist, oder:
7) freies Abkühlenlassen unter Rühren im Reaktor auf 55-65 °C; wenn diese Temperatur erreicht ist, Beginnen einer Neutralisation der Natronlauge mit Essigsäure, bis ein pH-Wert von 6,8-7,2 erhalten wird;
8) Zugeben eines bakteriziden Mittels, vorzugsweise eines auf Basis von 4-Chlor-3-methylphenolnatriumsalz wie Preventol WB^{®};
9) Einstellen des pH-Werts, falls erforderlich, zwischen 6,8 und 7,2;
10) Einstellen, falls erforderlich, des Feuchtigkeitsprozentsatzes auf 23-27 %, der Konzentration des hydrolysierten Kollagens auf 73-77 %, vorzugsweise 75 %, des pH-Werts von 6,8 bis 7,2 und der Viskosität von 6.000 bis 36.000 cps (Brookfield).

2. Hydrolysiertes Kollagen, das durch das Verfahren nach Anspruch 1 erhalten wird, **dadurch gekennzeichnet, dass** es einen pH-Wert von 6,8 bis 7,2, eine Viskosität von 6.000 bis 36.000 cps, einen Feuchtigkeitsanteil von 23 bis 27 %, eine Konzentration an hydrolysiertem Kollagen von 73 bis 77 % und einen nichtionischen Charakter aufweist.

3. Gegerbtes oder nachgegerbtes Lederprodukt, **dadurch gekennzeichnet, dass** es durch Gerben oder Nachgerben desselben mit dem hydrolysierten Kollagen nach Anspruch 2 erhalten wird, wobei das Produkt eine Füllung mit einer Konzentration von mindestens 75 % umfasst.

## Revendications

1. Procédé pour la préparation de collagène hydrolysé pour le tannage et le retannage de cuir à l'aide de déchets de cuir en bleu humide, **caractérisé en ce qu'**il comprend les étapes consistant à :
1) ajouter de la soude caustique liquide à 50 °Bé (densité sur l'échelle de Baumé) à un réacteur en acier inoxydable ouvert, pourvu d'un agitateur, d'une chemise à circulation et d'un ensemble de vannes et d'accessoires pour son fonctionnement ;
2) agiter et monter la température à 80 °C ;
3) ajouter des rognures ou déchets en bleu humide tout en agitant, éviter la formation excessive de mousse au moyen de l'ajout d'un agent antimousse tel que Antimussol Wo6^{®}, maintenir la température à 80 °C ;
4) augmenter la température jusqu'à atteindre une température d'ébullition une fois l'ajout de rognures en bleu humide terminé, maintenir la température jusqu'à 12 heures, dans lequel les rognures sont incorporées dans un état humide ;
5) effectuer des tests en laboratoire en commençant à 9 heures d'ébullition, puis toutes les heures, jusqu'à 12 heures, pour déterminer la stabilité de l'émulsion et la concentration de celle-ci à 10 % de concentration ;
6) selon l'analyse précédente, maintenir l'ébullition jusqu'à parvenir au minimum de matière insoluble tel que souhaité dans l'émulsion et à la stabilité de l'émulsion, ou :
7) laisser refroidir librement tout en agitant, dans le réacteur, jusqu'à 55-65 °C ; lorsque cette température est atteinte, commencer la neutralisation de la soude caustique avec de l'acide acétique jusqu'à obtenir un pH de 6,8-7,2 ;
8) ajouter un agent bactéricide, de préférence un à base de sel de sodium de 4-chloro-3-méthylphénol tel que Preventol WB^{®} ;
9) ajuster le pH, si nécessaire, entre 6,8 et 7,2 ;
10) ajuster, si nécessaire, le pourcentage d'humidité à 23-27 %, la concentration de collagène hydrolysé à 73-77 %, de préférence à 75 %, le pH à 6,8 à 7,2 et la viscosité à 6 000 à 36 000 cPs (Brookfield).

2. Collagène hydrolysé obtenu par le procédé selon la revendication 1, **caractérisé en ce qu'**il a un pH de 6,8 à 7,2, une viscosité de 6 000 à 36 000 cPs, un pourcentage d'humidité de 23 à 27 %, une concentration de collagène hydrolysé de 73-77 % et un caractère non ionique.

3. Produit de cuir tanné ou retanné **caractérisé en ce qu'**il est obtenu par tannage ou retannage de celui-ci avec le collagène hydrolysé selon la revendication 2, dans lequel ledit produit comprend une charge d'au moins 75 % de concentration.
